# EUROPEAN PATENT SPECIFICATION

(11) **EP 1 573 765 B1**
(45) Date of publication and mention of the grant of the patent: **03.03.2010**
(21) Application number: 03799550.3
(22) Date of filing: 10.12.2003
(51) Int. Cl.: H01H 27/06, F02N 1/00

(54) **IGNITION SWITCH WITH LOW CURRENT AND DIGITAL SIGNAL FOR VEHICLES AND IGNITION DEVICE EQUIPED WITH SAID SWITCH**
FAHRZEUGANLASSSCHALTER MIT SCHWACHSTROM UND DIGITAL AUSGANG UND DAZUGEHÖRIGES SYSTEM
COMMUTATEUR D'ALLUMAGE A FAIBLE COURANT ET SIGNAUX NUMERIQUES POUR VEHICULES, ET DISPOSITIF D'ALLUMAGE DOTE DE CE COMMUTATEUR

(30) Priority: 13.12.2002 ES 200202860
(43) Date of publication of application: 14.09.2005
(73) Proprietor: Valeo Sistemas de Seguridad y de Cierre, 08640 Olesa de Montserrat (ES)
(72) Inventor: HERRERO PELLICER, Jose-Antonio, E-08860 Barcelona (ES); PLANA BAGUE, Miquel, E-08005 Barcelona (ES)
(74) Representative: Jacquot, Ludovic R. G.
(86) International application number: PCT/EP2003/050971
(87) International publication number: WO 2004/055360

(56) References cited:
- WO-A-02/103732
- DE-A- 3 219 853
- FR-A- 2 638 918
- JP-A- 2000 110 696
- JP-A- 2002 124 156
- US-A- 3 803 371
- US-A- 6 122 944

## Description

This invention relates to a starter equipment for vehicles comprising a low current starter switch and digital signal for vehicles.

### BACKGROUND TO THE INVENTION

Starter switches which are high power switches, that is having contact members and conductor tracks located in such a way that the electrical contact between the battery and the starting motor, the accessories, etc., opens or closes in each angular position of the switch rotor, are known.

Switches having a configuration similar to the above which instead of directly opening and closing the contact between the battery and the blocks which have to be activated connect or disconnect corresponding relays, each of which are associated with a block, have also been developed.

Known switches have major disadvantages.

The main problems arise from the use of a power switch: primarily, the switch is a high cost component which is subject to energy requirements and needs sophisticated design and materials. It must guarantee the quality of the electrical contact in all circumstances overcoming the problems of friction, wear, loose dielectric particles, oil and the like - and all this with high power contacts, above all in the case of the starting motor, which has very high consumption. Another problem is that the switch is not a standard part, and therefore a separate design is needed for each application, and this renders development and manufacture expensive.

Furthermore the systems described make it necessary to use significant lengths of power cable, above all when relays are used. This makes the assembly more expensive and gives rise to space problems becau se of the considerable diameter of these cables.

On the other hand patent application ES 200101408 relates to a low current starter switch for vehicles comprising a rotor which rotates as one with the anti-theft steering lock, and a low current electrical circuit and variable resistance which depends on the angular position of the rotor providing an output voltage which varies in relation to the said resistance.

Preferably this switch comprises a set of three resistances having different values connected in series through a printed circuit, and one pair of cursors which rotate as one with the anti-theft rotor and which change the resistances circuit according to their angular position to yield a different output voltage in each case. According to the output voltage, and therefore depending on the position of the anti-theft rotor, a control circuit governs the relays associated with the different blocks in the vehicle which have to be activated (accessories, driving, starting).

This switch is reliable, versatile and of low cost, and makes it possible to dispense with a good part of the power cables.

However, the resistances present occupy a considerable space within the switch. Likewise, because of the fact that the output is an analogue output it is necessary to use an additional control circuit to read the said analogue output and control the relays.

Patent JP 2002124156 A refers to a switch device for key operation which comprises two housing facing each other, on which a first and second rotation holders are mounted, slide contacts contacting with respective fixed contact points are arranged in the first and second housing parts respectively, and the first and the second rotation holders are supported by a supporting part of a rotative operation shaft which has a base shaft part having a key groove. The switch is able to switch even the circuits of various electronic devices in a vehicle cabin, to which, a multiplex drive is applied.

Patent DE 3219853 A1 refers to a multiple switch, especially an ignition switch for motor vehicles, which comprises a central contact connected by means of contact links to a plurality of outer stationary contacts, in an alternating switching sequence. Each contact link is in permanent contact with the central contact, by means of a stamped contact surface, and, at the other end, has a freely rotatable contact roller for making contact with the stationary contacts. The stationary contacts are partially enclosed on one or both sides by control tracks for the contacts rollers of the contact links. No circuit making or breaking occurs on the central contact and on the transition from the contact shaft to the contact roller, and hence also no erosion.

Patent JP2000110696 A refers to a engine starting monitor for diesel engine driven work machine, which diesel engine driven work machine is equipped with a diesel engine, a starter motor, a battery, a battery relay and starter relay, a generator and with a key switch acting as a certification device generating a start signal. The constitution is equipped with a starting command detecting means imputing a start signal, an operating condition detecting means imputing a generation signal from the generator, and with a starting condition judging means taking in a starting signal and a generation signal, and determining whether starting is normal or not. The starting command detecting means, the operating condition detecting means and the starting condition judging means, are materialized by a micro-computer.

### DESCRIPTION OF THE INVENTION

The object of the starter equipment for vehicles according to this invention is to overcome the disadvantages presented by the starter equipments known in the art, providing a number of advantages which will be described below.

The starter equipment for vehicles of the present invention as stated in appended claim 1.

Through these features the switch can be used to generate reliable signals indicating the position of the anti-theft device, according to which the different items of electrical equipment in the vehicle are activated. As a consequence there is no passage of high current through the switch, and the design and materials requirements are very much reduced.

Furthermore there are no problems in the switch such as wear, friction, loose dielectric particles and the like, as is the case in power switches.

An additional advantage is elimination of the resistances, which offers a saving in space and therefore a switch of smaller size.

Also the development and production cost of the switch is substantially reduced in comparison with the power switches used hitherto.

In this way, for example, when the three bits are at 0 all systems are deactivated; with the values (0, 0, 1) the accessories are activated, with the values (0, 1, 1) all the driving systems are activated, and with the values (1, 1, 1) the starter motor is activated.

In addition to this the said switch is more versatile, because additional functions can be added without modifying the structure, as the three output bits are able to provide eight combinations of values, of which in principle only four are used.

In this way, given that the output is directly digital and not analogue, it can be read by a calculator, which may be the calculator present in the vehicle, so that the control circuit used in the switches known in the art is also unnecessary.

Advantageously the cursor comprises a metal plate fixed to a face of the rotor and provided with at least one finger in contact with the tracks of the printed circuit.

### BRIEF DESCRIPTION OF THE DRAWINGS

In order to assist the description of what has been described above, drawings are appended in which a practical embodiment of the low current starter switch and digital signal for vehicles according to the invention is illustrated diagrammatically and only by way of a non-restrictive example, in which drawings:
Figure 1 is a perspective and exploded view of a starter switch according to the invention, and
Figure 2 is the connection diagram for a starter system incorporating a switch according to the invention.

### DESCRIPTION OF A PREFERRED EMBODIMENT

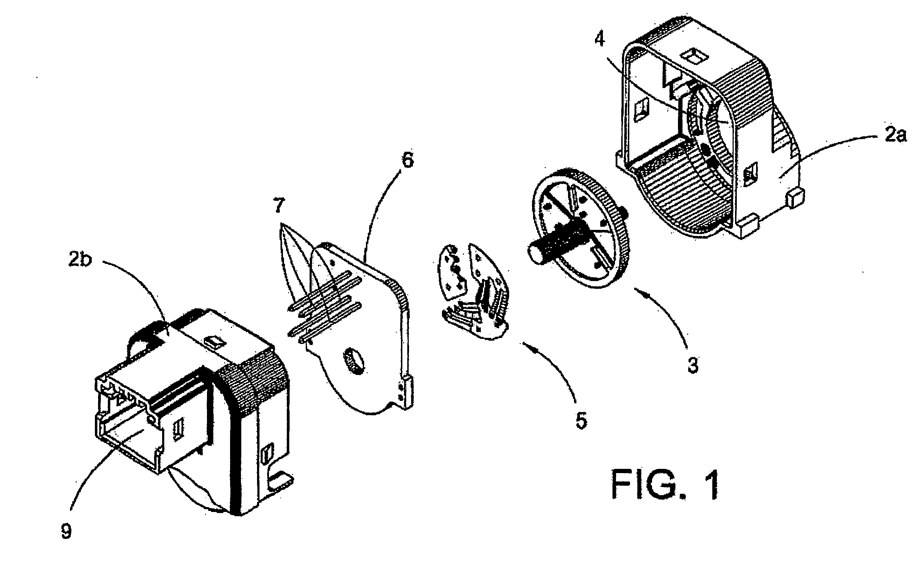

A starter switch 1 according to the invention, as may be seen in the exploded view in Figure 1, comprises a housing which houses the components of switch 1 and is formed of two parts 2a and 2b which are connected together by means of a system of elastic catches.

Within body 2a, 2b there is a rotor 3 with one of its ends accessible from the exterior through an opening 4 in part 2a of the body. This end of the rotor which is accessible from the exterior of the body has a shape, which cannot be seen in Figure 1, which is appropriate for connection to the end of the vehicle's anti-theft locking cylinder (not shown); thus, when the user turns the key in the anti-theft cylinder the rotation is transferred to rotor 3.

The switch is mounted on the vehicle's steering column in such a way that rotor axis 3 is in line with the axis of the anti-theft device.

A cursor 5 comprising a metal plate having a set of fingers bent so that they project from the plane of the plate is assembled to form one piece with the rotor. These fingers are designed to slide over the tracks of a printed circuit (not visible in the figure) formed on a corresponding plate 6.

Cursor fingers 5 have the function of connecting the various points of the printed circuit together, depending on the position of rotor 3 with which it forms one member, in the manner which will be explained below.

Connection pins 7 forming a low voltage input and a three bit digital output are located on printed circuit board 6 and connect with appropriate points on the tracks of the circuit.

Connecting pins 7 are accessible from the exterior of part 2b of the body through a suitable opening 9.

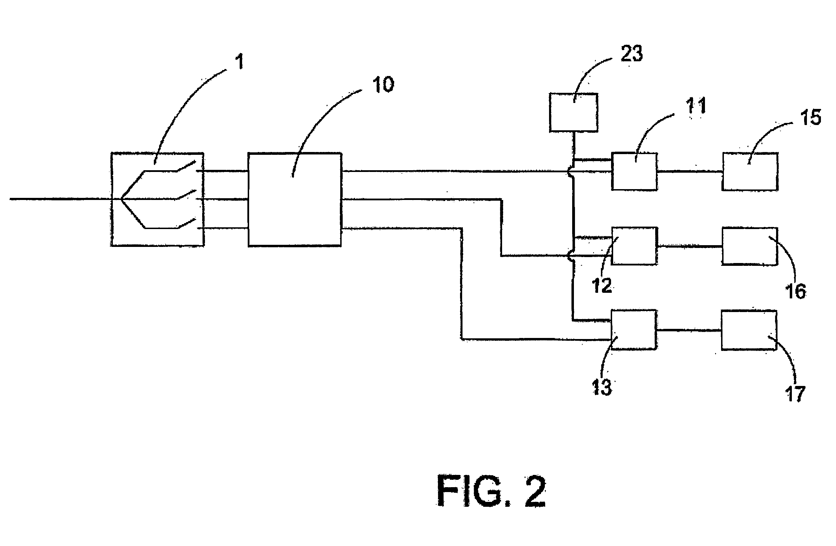

As will be seen in the connection diagram in Figure 2, switch 1 is connected to a calculator 10 through connection pins 7.

Calculator 10 reads the combination of values of the three output bits at all times, and according to this combination of values controls the activation of relays 11, 12, 13 connected to battery 23.

Rotating cursor 5 associated with rotor 3 of the anti-theft device alters the value of the output according to its position. One function - stop, accessories, driving or starting - is associated with each combination of values (0 or 1) of the three bits in such a way that calculator 10 activates or deactivates relays 11,12,13 required in each case.

In one embodiment the functions according to the values of the three output bits are:

| | STOP | ACCESSORIES | DRIVING | STARTING |
|---|---|---|---|---|
| Bit 1 | 0 | 0 | 0 | 1 |
| Bit 2 | 0 | 0 | 1 | 1 |
| Bit 3 | 0 | 1 | 1 | 1 |

When the three bits are 0, all systems are deactivated; with values (0, 0, 1) accessories 15 are activated, with values (0, 1, 1) all driving systems 16 are activated, and with values (1, 1, 1) starter motor 17 is activated.

Relays 11, 12, 13 are located close to the components which have to be activated. As a consequence the amount of power cable (indicated by the thick line in Figure 2) required for the installation is a minimum. The other cables (indicated by a thin line) are signal cables and can therefore be very much finer cables.

The materials which are used to manufacture the components making up the low current starter switch described, and the shapes and dimensions of the same and all accessory details appertaining thereto are independent of the object of this invention and may be replaced by others which are technically equivalent provided they do not affect the essential nature thereof or depart from the scope defined by the claims appended below.

## Claims

1. Starter equipment for vehicles, comprising a starter switch (1) comprising a rotor (3) which rotates as one with the anti-theft locking cylinder, a low current electrical circuit comprising a printed circuit board (6) and at least one cursor (5) which rotates as one with the rotor (3) intended to come into contact with tracks of the printed circuit (6), the electrical circuit comprising one low voltage input and three digital outputs in such a way that the cursor (5) can alter the value of the digital outputs according to the predetermined angular positions of the same, and each combination of values of the three outputs is associated with a specific function, **characterized in that** the starter equipment also comprises a calculator (10) connected on the one hand to the three digital outputs of the electrical circuit of the switch (1) and on the other hand to at least one relay (11, 12, 13), said calculator (10) activating the at least one relay (11, 12, 13) according to the combination of values of the three outputs.

2. Starter equipment according to Claim 1, **characterized in that** the cursor (5) comprises a metal plate fixed to one face of the rotor (3) and provided with al least one finger in contact with the tracks of the printed circuit (6).

## Patentansprüche

1. Anlasseinrichtung für Fahrzeuge, umfassend einen Anlassschalter (1) mit einem Rotor (3), der drehfest mit dem Diebstahlschutz-Schließzylinder verbunden ist, einer elektrischen Schwachstromschaltung mit einer Leiterplatte (6) und mindestens einem Fingerelement (5), das drehfest mit dem Rotor (3) verbunden ist und in Kontakt mit Leiterbahnen der Leiterplatte (6) kommen soll, wobei die elektrische Schaltung einen Niederspannungseingang und drei digitale Ausgänge umfasst, so dass das Fingerelement (5) den Wert der digitalen Ausgänge gemäß der vorbestimmten Winkelstellungen derselben ändern kann und jede Kombination von Werten der drei Ausgänge einer speziellen Funktion zugeordnet wird, **dadurch gekennzeichnet, dass** die Anlasseinrichtung des Weiteren einen Rechner (10) umfasst, der einerseits mit den drei digitalen Ausgängen der elektrischen Schaltung des Schalters (1) und andererseits mit mindestens einem Relais (11, 12, 13) verbunden ist, wobei der Rechner (10) das mindestens eine Relais (11, 12, 13) gemäß der Kombination von Werten der drei Ausgänge aktiviert.

2. Anlasseinrichtung nach Anspruch 1, **dadurch gekennzeichnet, dass** das Fingerelement (5) eine Metallplatte umfasst, die an einer Fläche des Rotors (3) befestigt ist und mit mindestens einem Finger versehen ist, der mit den Leiterbahnen der Leiterplatte (6) in Kontakt steht.

## Revendications

1. Equipement de démarreur pour véhicules, comprenant un commutateur de démarreur (1) comprenant un rotor (3) qui tourne simultanément avec le cylindre de verrouillage anti-vol, un circuit électrique à faible courant comprenant une carte de circuit imprimé (6) et au moins un curseur (5) qui tourne simultanément avec le rotor (3) et qui est destiné à entrer en contact avec des pistes du circuit imprimé (6), le circuit électrique comprenant une entrée à basse tension et trois sorties numériques, de telle sorte que le curseur (5) puisse modifier la valeur des sorties numériques en fonction des positions angulaires prédéterminées de celui-ci, et chaque combinaison de valeurs des trois sorties est associée à une fonction spécifique, **caractérisé en ce que** l'équipement de démarreur comprend en outre un calculateur (10) qui est connecté d'une part aux trois sorties numériques du circuit électrique du commutateur (1), et d'autre part à au moins un relais (11, 12, 13), ledit calculateur (10) activant ledit au moins un relais (11, 12, 13) en se basant sur la combinaison de valeurs des trois sorties.

2. Equipement de démarreur selon la revendication 1, **caractérisé en ce que** le curseur (5) comprend une plaque de métal qui est fixée à une première face du rotor (3) et qui comporte au moins un doigt qui est en contact avec les pistes du circuit imprimé (6).
